# EUROPEAN PATENT SPECIFICATION

(11) **EP 3 761 526 B1**
(45) Date of publication and mention of the grant of the patent: **16.08.2023**
(21) Application number: 18908664.8
(22) Date of filing: 05.03.2018
(51) Int. Cl.: H04B 10/079, H04B 10/071, G01J 3/00

(54) **OPTICAL PERFORMANCE MONITORING APPARATUS AND METHOD**
VORRICHTUNG UND VERFAHREN ZUR ÜBERWACHUNG DER OPTISCHEN LEISTUNG
APPAREIL ET PROCÉDÉ POUR SURVEILLER UNE PERFORMANCE OPTIQUE

(43) Date of publication of application: 06.01.2021
(73) Proprietor: HUAWEI TECHNOLOGIES CO., LTD., Shenzhen, Guangdong 518129 (CN)
(72) Inventor: SUN, Tianbing, Shenzhen, Guangdong 518129 (CN); ZHAO, Zhenqing, Shenzhen, Guangdong 518129 (CN); SU, Yufeng, Shenzhen, Guangdong 518129 (CN); KONG, Fanhua, Shenzhen, Guangdong 518129 (CN)
(74) Representative: Grünecker Patent- und Rechtsanwälte PartG mbB
(86) International application number: PCT/CN2018/077999
(87) International publication number: WO 2019/169525

(56) References cited:
- CN-A- 103 278 261
- CN-A- 104 568 391
- CN-A- 107 621 280
- US-A1- 2010 265 974
- US-A1- 2017 207 849

## Description

### TECHNICAL FIELD

This application relates to the field of communications technologies, and in particular, to an optical performance monitoring apparatus and method.

### BACKGROUND

Currently, an optical network based on a wavelength division multiplexing (Wavelength Division Multiplexing, WDM) technology constitutes a basic physical layer of a communications network. To ensure reliable operation of the optical network on a plurality of channels at a high rate, a signal wavelength, a power, an optical signal-to-noise ratio, and other performance of each channel may be monitored at a key node in the optical network by using an optical power monitoring (Optical Power Monitoring, OPM) module. The key node may be referred to as a detection point.

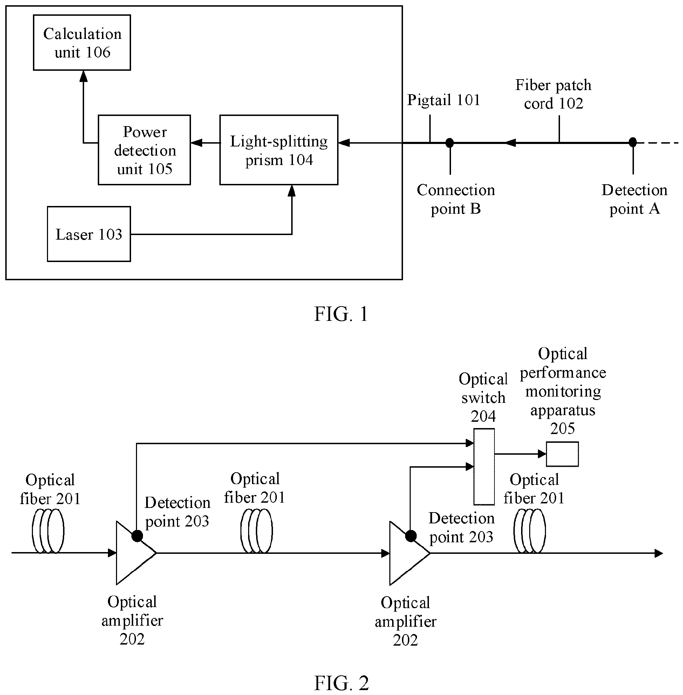

FIG. 1 is a schematic diagram of a system including an OPM module. As shown in FIG. 1, the OPM module usually includes a pigtail 101. If each channel needs to be monitored at a detection point A by using the OPM module, one end of a fiber patch cord 102 may be connected to the pigtail 101 of the OPM module, and the other end may be connected to the detection point A, so that the OPM module is connected to the detection point A. A joint between the fiber patch cord 102 and the pigtail 101 of the OPM module is referred to as a connection point B.

During monitoring, a detected signal transmitted in an optical fiber enters the fiber patch cord 102 through the detection point A, and then is input to the OPM module through the fiber patch cord 102 and the pigtail 101. The OPM module includes a laser 103, a light-splitting prism 104, a power detection unit 105, and a calculation unit 106. The laser 103 emits an optical signal. A coherence effect occurs in the optical signal and the input detected signal at the light-splitting prism 104, so that optical signals in different polarization states are obtained. Then, the power detection unit 105 detects powers of the optical signals in different polarization states, and sends the detected powers of the optical signals to the calculation unit 106. The calculation unit 106 may calculate, based on the powers of the optical signals, a performance monitoring result of each channel that is in the optical fiber and that is currently used to transmit the optical signal, and output the performance monitoring result of each channel.

It can be learned from the foregoing description that, when the OPM module is used to monitor performance of each channel, the fiber patch cord is inserted between the OPM module and the detection point. However, when transmitted from the detection point to the OPM module, the detected signal suffers from a power loss on the fiber patch cord. This power loss on the fiber patch cord is referred to as a fiber patch cord connection insertion loss. Due to impact of the fiber patch cord connection insertion loss, the powers, detected by the OPM module, of the optical signals in different polarization states are inaccurate, and the output performance monitoring result of each channel that is calculated based on the powers of the optical signals in different polarization states is inaccurate.

### SUMMARY

To resolve a problem in the related art that a performance monitoring result of each channel is inaccurate due to impact of a fiber patch cord connection insertion loss, this application provides an optical performance monitoring apparatus and method. Technical solutions are as follows:

According to a first aspect, an optical performance monitoring apparatus according to claim 1 is provided. Further embodiments arwe defined in the dependent claims.

According to a second aspect, an optical performance monitoring method according to claim 6 is provided. Further embodiments arwe defined in the dependent claims.

It should be noted that the optical performance monitoring apparatus may first detect the insertion loss value between the apparatus and the detection point when the switch device is in the on state, and a possible fault point in the fiber patch cord may be further located based on the powers detected by the power detection unit. Then, when the switch device is in the off state, the optical performance monitoring apparatus may detect a power of the detected signal. In this case, because the insertion loss value between the apparatus and the detection point has been determined, the detected power of the detected signal may be corrected by using the determined insertion loss value, to improve accuracy of power detection and improve accuracy of the performance monitoring result of each channel.

The extended band is an additional extended band other than the band of the detected signal. In other words, the extended band is different from the band of the detected signal. When the switch device is in the on state, the optical performance monitoring apparatus is configured to detect the insertion loss value. In this case, the control unit may control the laser to output the first optical signal whose wavelength is within the extended band, to avoid a wavelength conflict with the detected signal.

The technical solutions provided in this application have the following beneficial effects: This application provides the optical performance monitoring apparatus. The apparatus includes the power detection unit, the light-splitting prism, the laser, the optical splitter, the switch device, and the circulator. The optical port of the laser is connected to the first optical port of the optical splitter, the second optical port of the optical splitter is connected to the first optical port of the switch device, the second optical port of the switch device is connected to the first optical port of the circulator, and the light-splitting prism is located between the circulator, the optical splitter, and the power detection unit. Through state switching of the switch device in the optical performance monitoring apparatus, the optical performance monitoring apparatus may be configured to detect the insertion loss value between the apparatus and the detection point, and may also be configured to detect the power of the detected signal. In other words, the optical performance monitoring apparatus integrates functions of power detection and insertion loss detection, and therefore is applicable to more application scenarios. In addition, because the apparatus can detect the insertion loss value, the power of the detected signal may be detected after the insertion loss value is detected, and then the power is corrected by using the detected insertion loss value, to improve accuracy of power detection and improve accuracy of the performance monitoring result of each channel.

### BRIEF DESCRIPTION OF DRAWINGS

FIG. 1 is a schematic diagram of a system including an OPM module;
FIG. 2 is a schematic diagram of an application system of an optical performance monitoring apparatus according to an embodiment of this application;
FIG. 3A is a schematic structural diagram of an optical performance monitoring apparatus 300 according to an embodiment of this application;
FIG. 3B is a schematic structural diagram of another optical performance monitoring apparatus 300 according to an embodiment of this application;
FIG. 4 is a diagram of steps of detecting, by using an optical performance monitoring apparatus, an insertion loss value between the apparatus and a detection point according to an embodiment of this application; and
FIG. 5 is a diagram of steps of detecting optical performance of each channel by using the optical performance monitoring apparatus according to an embodiment of this application.

### DESCRIPTION OF EMBODIMENTS

To make the objectives, technical solutions, and advantages of this application clearer, the following further describes the implementations of this application in detail with reference to the accompanying drawings.

Before the embodiments of this application are described in detail, an application system of an optical performance monitoring apparatus provided in the embodiments of this application is first described.

FIG. 2 is a schematic diagram of an application system of an optical performance monitoring apparatus according to an embodiment of this application. As shown in FIG. 2, in an optical communications network, an optical fiber 201 is configured to transmit an optical signal. During transmission, due to a loss and dispersion in the optical fiber, energy of the optical signal decreases as a transmission distance increases. Based on this, an optical amplifier 202 may be disposed at an interval of a specific distance to amplify the optical signal. When optical performance monitoring is performed on each channel in the optical fiber, the optical amplifier 202 may be connected to a fiber patch cord to connect to an optical performance monitoring apparatus 205, so that a signal wavelength, a power, an optical signal-to-noise ratio, and other performance of each channel are monitored by using the optical performance monitoring apparatus 205. An optical port that is on the optical amplifier 202 and that is connected to the fiber patch cord is a detection point 203. The optical performance monitoring apparatus 205 is the optical performance monitoring apparatus provided in the embodiments of this application.

In an actual application, considering that the optical performance monitoring apparatus 205 is relatively expensive, a plurality of detection points 203 may be connected to different input optical ports on an optical switch 204 by using different fiber patch cords, and an output optical port of the optical switch 204 is connected to the optical performance monitoring apparatus 205. In this way, the optical performance monitoring apparatus 205 may monitor different detection points through switching of the optical switch 204. In other words, a plurality of detection points may be monitored by one optical performance monitoring apparatus 205 through switching of the optical switch 204. It should be noted that the system shown in FIG. 2 may alternatively not include the optical switch 204, and the optical performance monitoring apparatus 205 may be directly connected to a to-be-detected detection point to complete monitoring.

The following describes the optical performance monitoring apparatus provided in the embodiments of this application.

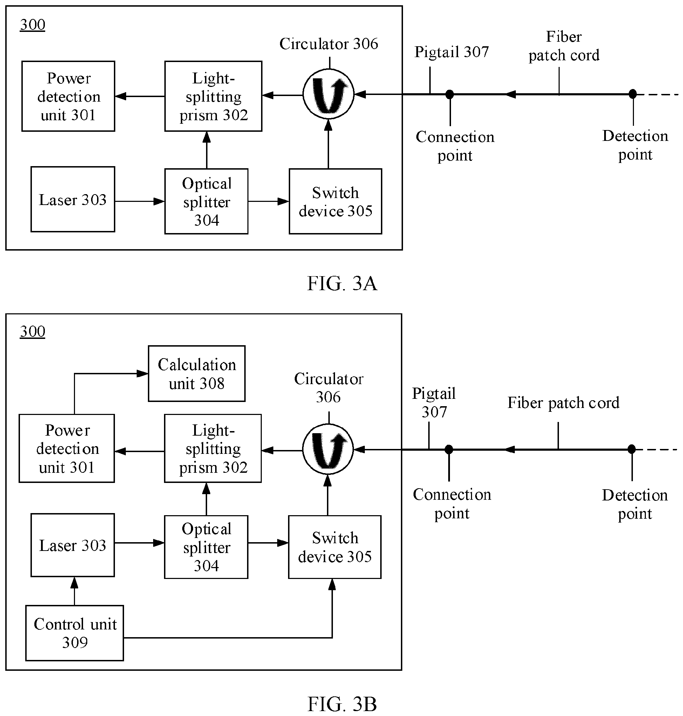

FIG. 3A is a schematic structural diagram of an optical performance monitoring apparatus 300 according to an embodiment of this application. The optical performance monitoring apparatus 300 may be applied to the application system shown in FIG. 2 to perform optical performance monitoring. In other words, the optical performance monitoring apparatus 205 in the application system shown in FIG. 2 may be the optical performance monitoring apparatus 300 shown in FIG. 3A. As shown in FIG. 3A, the apparatus includes a power detection unit 301, a light-splitting prism 302, a laser 303, an optical splitter 304, a switch device 305, a circulator 306, and a pigtail 307.

An optical port of the laser 303 is connected to a first optical port of the optical splitter 304, a second optical port of the optical splitter 304 is connected to a first optical port of the switch device 305, a second optical port of the switch device 305 is connected to a first optical port of the circulator 306, a second optical port of the circulator 306 is connected to the pigtail 307, and the light-splitting prism 302 is located between the circulator 306, the optical splitter 304, and the power detection unit 301.

Specifically, when the optical performance monitoring apparatus is used, the pigtail 307 of the optical performance monitoring apparatus may be connected to a fiber patch cord, and the other end of the fiber patch cord is connected to a detection point, so that the optical performance monitoring apparatus is connected to the system.

The laser 303 may be a wavelength-tunable laser, and the laser 303 may include an output optical port. Through the optical port, the laser 303 may output optical signals of different wavelengths. When the optical performance monitoring apparatus is connected to the system, the fiber patch cord needs to be introduced. However, when transmitted from the detection point to the optical performance monitoring apparatus, a detected signal suffers from a power loss on the fiber patch cord. This power loss on the fiber patch cord is a fiber patch cord connection insertion loss. Therefore, to accurately monitor optical performance of each channel, the optical performance monitoring apparatus provided in this embodiment of this application needs to detect the fiber patch cord connection insertion loss. Based on this, a wavelength range of the optical signals output by the laser 303 needs to include two bands. One band includes a band of the detected signal, used to detect the optical performance of each channel. The other band is an extended band, used to detect the insertion loss of the fiber patch cord. An advantage of supporting the other band by the laser 303 is that a wavelength conflict with the detected signal can be prevented when an insertion loss value of the fiber patch cord is detected.

The optical splitter 304 may include three optical ports. The first optical port of the optical splitter 304 is an input optical port, and the optical signal output by the laser 303 may be input to the optical splitter 304 from the first optical port. Both the second optical port and a third optical port of the optical splitter 304 are output optical ports. After splitting the received optical signal into two light beams, the optical splitter 304 may output the two light beams through the second optical port and the third optical port of the optical splitter 304. A light beam output through the second optical port of the optical splitter 304 may arrive at the switch device 305, and a light beam output through the third optical port of the optical splitter 304 may arrive at the light-splitting prism 302.

It should be noted that, in this embodiment of this application, a split ratio of the optical splitter 304 may be preset, so that the received optical signal output by the laser is split into two light beams based on the split ratio. For example, the split ratio may be 1:1.

The switch device 305 may include two optical ports. The first optical port of the switch device 305 is an input optical port, and is connected to the second optical port of the optical splitter 304. The second optical port of the switch device 305 is an output optical port, and is connected to the first optical port of the circulator 306. It should be noted that the switch device 305 may include two states: an on state and an off state. When the switch device 305 is in the on state, the light beam output through the second optical port of the optical splitter 304 may be transmitted to the circulator 306 through the switch device 305. When the switch device 305 is in the off state, the light beam output through the second optical port of the optical splitter 304 cannot pass through the switch device 305. It should be further noted that the switch device 305 may be an optical switch, or may be a variable optical attenuator (Variable Optical Attenuator, VOA).

The circulator 306 may include three optical ports. When the switch device 305 is in the on state, the light beam output from the second optical port of the switch device 305 may be input to the circulator 306 through the first optical port of the circulator 306. The detected signal or a reflected signal in the fiber patch cord may be input to the circulator 306 from the second optical port of the circulator 306 through the pigtail 307 connected to the fiber patch cord, and then output from a third optical port of the circulator 306. It should be noted that inside the circulator 306, conduction is performed in an anticlockwise direction. To be specific, conduction is performed from the first optical port to the second optical port of the circulator 306. In this way, the light beam input from the first optical port of the circulator 306 may be reversely input to the pigtail 307 through the second optical port, and then transmitted to the fiber patch cord through the pigtail 307. Similarly, conduction is also performed from the second optical port to the third optical port of the circulator 306. In this way, an optical signal input from the second optical port of the circulator 306 may be output from the third optical port.

The light-splitting prism 302 may be placed between the optical splitter 304, the circulator 306, and the power detection unit 301. Specifically, the light-splitting prism 302 may include at least two incident surfaces, and each incident surface is corresponding to one incident direction. A first direction faces the third optical port of the optical splitter 304, and the light beam output through the third optical port of the optical splitter 304 may be transmitted to the light-splitting prism 302 in the first direction, to arrive at a first incident surface of the light-splitting prism 302. A second direction may face the third optical port of the circulator 306, and the optical signal input from the second optical port of the circulator 306 and output from the third optical port of the circulator 306 may be transmitted to the light-splitting prism 302 in the second direction, to arrive at a second incident surface of the light-splitting prism 302. The light-splitting prism 302 may couple optical signals received on different incident surfaces, and output a coupled optical signal in a third direction. The third direction faces the power detection unit 301. In other words, the light-splitting prism 302 is disposed on a path from the circulator 306 to the power detection unit 301 and a path from the optical splitter 304 to the power detection unit 301.

The power detection unit 301 may include a photodetector (Photodetector, PD) and a circuit module configured to convert a photocurrent into a power. The power detection unit 301 may include an optical port. The coupled optical signal output from the light-splitting prism 302 may be input to the PD in the power detection unit 301 through the optical port. The PD may convert the received optical signal into a photocurrent, and input the photocurrent to the circuit module, so that the circuit module may convert the photocurrent into a power value.

In the present invention, after the power detection unit 301 detects the power of the optical signal, the power detected by the power detection unit 301 is further processed, to obtain the insertion loss value of the fiber patch cord or an optical performance monitoring result of each channel. Based on this, the power detection unit 301 may include an electrical interface, and may be externally connected, by using the electrical interface, to a calculation apparatus having a data processing function. After detecting the power of the optical signal, the power detection unit 301 may send the detected power to the calculation apparatus through the electrical interface, so that the calculation apparatus performs further data processing.

Optionally, in this embodiment of this application, the laser 303 and the switch device 305 each may include an electrical interface. By using the electrical interface, the laser 303 and the switch device 305 may be externally connected to a control apparatus. The control apparatus may control the laser 303 to output an optical signal and control the switch device 305 to switch between different states.

Optionally, in a possible implementation, the external calculation apparatus and control apparatus may be an integrated apparatus. In other words, the optical performance monitoring apparatus 300 may be externally connected to a processing apparatus that has control and data operation functions. The processing apparatus may include three electrical interfaces. The three electrical interfaces are respectively connected to the electrical interface of the laser 303, the electrical interface of the switch device 305, and the electrical interface of the power detection unit 301 in the optical performance monitoring apparatus 300, so that the processing apparatus may control the laser 303 to output an optical signal and control the switch device 305 to switch between different states, and may further receive the power output by the power detection unit 301, and process the received power.

The optical performance monitoring apparatus 300 shown in FIG. 3A may be externally connected to the calculation apparatus by using the electrical interface on the power detection unit 301, and/or may be externally connected to the control apparatus by using the electrical interfaces included in the laser 303 and the switch device 305. In a possible implementation, a control unit and/or a calculation unit may be integrated into the optical performance monitoring apparatus 300. FIG. 3B is a structural diagram of another optical performance monitoring apparatus 300 according to an embodiment of this application. As shown in FIG. 3B, the optical performance monitoring apparatus 300 not only includes a power detection unit 301, a light-splitting prism 302, a laser 303, an optical splitter 304, a switch device 305, a circulator 306, and a pigtail 307, but also includes a calculation unit 308 and a control unit 309.

Specifically, for descriptions of the power detection unit 301, the light-splitting prism 302, the laser 303, the optical splitter 304, the switch device 305, the circulator 306, and the pigtail 307, refer to related descriptions in the foregoing embodiment. Details are not described in this embodiment of this application again.

In addition, the power detection unit 301, the laser 303, and the switch device 305 each may further include an electrical interface. The calculation unit 308 includes an electrical port, and the electrical port may be connected to the electrical port of the power detection unit 301. In this way, after detecting a power, the power detection unit 301 may send the detected power to the calculation unit 308 for further processing.

The control unit 309 may include two electrical interfaces. A first electrical port is connected to the electrical port of the laser 303, and a second electrical port is connected to the electrical port of the switch device 305. The control unit 309 may send a control signal to the laser 303 through the first electrical port, to control the laser to output an optical signal. Specifically, the control unit 309 may control an occasion when the laser outputs the optical signal and a wavelength of the output optical signal. In addition, the control unit 309 may further send a control signal to the switch device 305 through the second electrical port, to control the switch device 305 to switch between an on state and an off state.

It should be noted that both the calculation unit 308 and the control unit 309 are integrated into the optical performance monitoring apparatus 300 shown in FIG. 3B. In a possible implementation, the calculation unit 308 may be integrated into the optical performance monitoring apparatus 300 that is externally connected to a control apparatus by using the electrical interface on the laser 303 and the electrical interface on the switch device 305. Alternatively, the control unit 309 may be integrated into the optical performance monitoring apparatus 300 that is externally connected, by using the electrical port on the power detection unit 301, to a calculation apparatus having a data processing function.

After a structure of the optical performance monitoring apparatus 300 provided in the embodiments of this application is described, the following describes in detail a method for monitoring optical performance of each channel by using the optical performance monitoring apparatus 300 provided in the embodiments of this application.

Monitoring optical performance of each channel by using the optical performance monitoring apparatus 300 shown in FIG. 3A or FIG. 3B mainly includes the following two processes.
(1) Determine, by using the optical performance monitoring apparatus 300, an insertion loss value between a detection point and the apparatus 300.

It can be learned from the foregoing description about the application system of the optical performance monitoring apparatus and the foregoing description about the optical performance monitoring apparatus that, when the optical performance monitoring apparatus is used to monitor the optical performance of each channel, due to impact of a fiber patch cord connection insertion loss, when a detected signal is transmitted to the optical performance monitoring apparatus through a fiber patch cord, a power, detected by the optical performance monitoring apparatus, of the detected signal is less than an actual power of the detected signal at the detection point. Based on this, to enable the power, detected by the optical performance monitoring apparatus, of the detected signal to be closer to the actual power of the detected signal at the detection point so that a determined performance monitoring result of each channel is more accurate, before detecting the power of the detected signal, the optical performance monitoring apparatus may detect the insertion loss value between the detection point and the apparatus.

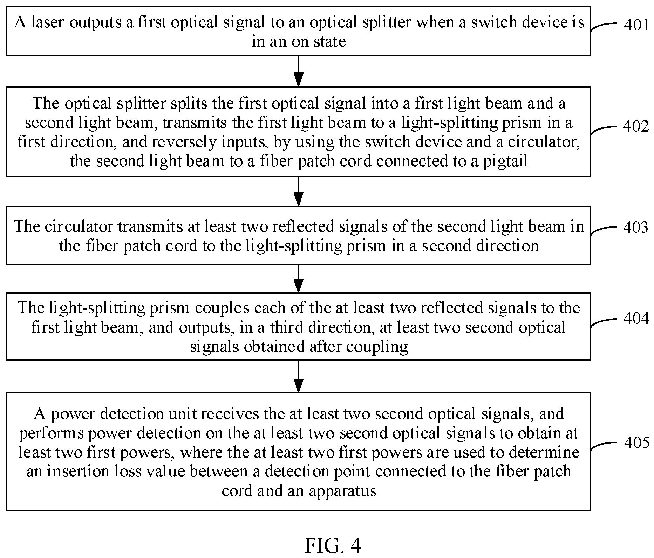

Next, in an embodiment of this application, a specific implementation process of detecting the insertion loss value is described in detail with reference to FIG. 4. As shown in FIG. 4, the detection process may include the following steps.

Step 401: The laser outputs a first optical signal to the optical splitter when the switch device is in the on state.

After the optical performance monitoring apparatus is connected to the detection point, the switch device in the optical performance monitoring apparatus is in the on state by default. In this case, the laser outputs the first optical signal to the optical splitter. The first optical signal is used to detect the insertion loss value. Therefore, to prevent a wavelength conflict with a wavelength of the detected signal, a wavelength range of the first optical signal is within an extended band. The extended band is an additional extended band other than a band in which the detected signal is located.

Step 402: The optical splitter splits the first optical signal into a first light beam and a second light beam, transmits the first light beam to the light-splitting prism in a first direction, and reversely inputs, by using the switch device and the circulator, the second light beam to the fiber patch cord connected to the pigtail.

After receiving the first optical signal, the optical splitter may split the first optical signal into two light beams based on a specified split ratio, which are the first light beam and the second light beam respectively. Then, the optical splitter may output the first light beam and the second light beam through two different optical ports. The optical splitter may output the first light beam through the third optical port. The third optical port faces the first incident surface of the light-splitting prism, and a direction that the third optical port faces is the first direction. After output from the third optical port, the first light beam is projected on the first incident surface of the light-splitting prism in the first direction.

The optical splitter may output the second light beam through the second optical port connected to the switch device. In this case, because the switch device is in the on state, the second light beam may be input to the circulator from the first optical port of the circulator after passing through the switch device. Because the circulator is in a conducting state from the first optical port to the second optical port in an anticlockwise direction, after input to the circulator from the first optical port of the circulator, the second light beam is output through the second optical port of the circulator, and reversely input to the fiber patch cord connected to the pigtail of the apparatus.

Step 403: The circulator transmits at least two reflected signals of the second light beam in the fiber patch cord to the light-splitting prism in a second direction.

Due to micro-irregularities of a refractive index of an optical fiber, the second light beam reversely input to the fiber patch cord presents Rayleigh scattering in the fiber patch cord. The at least two reflected signals are formed from backscattered light at a joint between the fiber patch cord and the pigtail, a joint between the fiber patch cord and the detection point, and another part of the fiber patch cord, and then are transmitted to the circulator, which are input to the circulator through the second optical port of the circulator. Because conduction is performed from the second optical port of the circulator to the third optical port of the circulator, the at least two reflected signals are output from the third optical port of the circulator. The third optical port faces the second direction. The at least two reflected signals output from the third optical port are projected on the second reflection surface of the light-splitting prism in the second direction.

Step 404: The light-splitting prism couples each of the at least two reflected signals to the first light beam, and outputs, in a third direction, at least two second optical signals obtained after coupling.

After the at least two reflected signals are projected on the second reflection surface of the light-splitting prism in the second direction, the at least two reflected signals each are coupled to the first light beam projected on the first reflection surface, and the at least two second optical signals are output in the third direction. The at least two second optical signals are transmitted to the power detection unit in the third direction.

Step 405: The power detection unit receives the at least two second optical signals, and performs power detection on the at least two second optical signals to obtain at least two first powers, where the at least two first powers are used to determine the insertion loss value between the detection point connected to the fiber patch cord and the apparatus.

After receiving the at least two second optical signals, the power detection unit may convert each of the at least two second optical signals into a photocurrent by using the PD, and convert the photocurrent into a power value by using the circuit module, to obtain the at least two first powers. The at least two first powers are used to determine the insertion loss value between the detection point connected to the fiber patch cord and the apparatus. In addition, the at least two first powers include a power P₁ of a reflected signal that is reflected from the second light beam at the joint between the fiber patch cord and the pigtail at an optical fiber reflection coefficient k, and a power P₂ of a reflected signal that is reflected from the second light beam at the joint between the fiber patch cord and the detection point at the optical fiber reflection coefficient k.

It should be noted that, if the optical performance monitoring apparatus includes a calculation unit, the power detection unit may transmit the at least two first powers to the calculation unit, and the calculation unit determines the insertion loss value based on the at least two first powers and outputs the insertion loss value. If the optical performance monitoring apparatus does not include a calculation unit, the power detection unit may send the at least two first powers to an external calculation apparatus, and the external calculation apparatus determines the insertion loss value based on the at least two first powers and outputs the insertion loss value.

After receiving the at least two first powers, the calculation unit or the calculation apparatus may obtain P₁ and P₂ from the at least two first powers, and calculate a difference between P₁ and P₂. Because both P₁ and P₂ are powers of optical signals that are reflected at the two joints of the fiber patch cord at the optical fiber reflection coefficient k after the second beam is reversely output to the fiber patch cord, after the difference between P₁ and P₂ is obtained through calculation, the calculation unit or the calculation apparatus may calculate a ratio of the difference to the reflection coefficient k, to be specific, (P₁-P₂)/k, to obtain the insertion loss value of the fiber patch cord connected between the optical performance monitoring apparatus and the detection point.

Optionally, in this embodiment of this application, if the insertion loss value obtained through calculation is relatively large, or in other words, if a power decrease from the detection point to the apparatus is relatively large, another point with a large insertion loss may be present between the detection point and the apparatus. This insertion loss point may be a connection point of an optical device or a fault point in the fiber patch cord. In this case, the optical performance monitoring apparatus may further locate the insertion loss point based on the at least two first powers, to troubleshoot a possible fault point.

(2) Monitor optical performance of each channel by using the optical performance monitoring apparatus 300.

After the insertion loss value between the detection point and the apparatus is determined, the optical performance monitoring apparatus may detect the power of the detected signal, and correct the detected power by using the determined insertion loss value, to determine the optical performance of each channel based on the corrected power, thereby eliminating the impact of the fiber patch cord connection insertion loss, and ensuring accuracy of the output performance monitoring result of each channel.

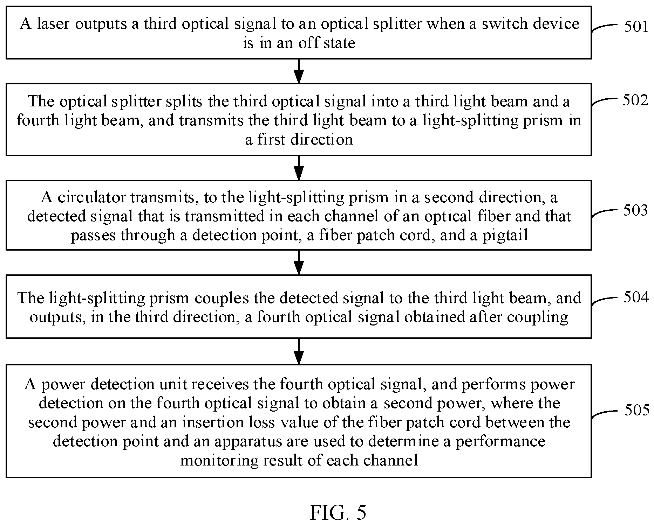

Next, in an embodiment of this application, a specific implementation process of detecting the optical performance of each channel is described in detail with reference to FIG. 5. As shown in FIG. 5, the process of detecting the optical performance of each channel may include the following steps.

Step 501: The laser outputs a third optical signal to the optical splitter when the switch device is in an off state.

After the optical performance monitoring apparatus determines the insertion loss value, if the optical performance monitoring apparatus includes a control unit, a switching signal may be sent to the switch device by using the control unit, so that the switch device switches from the on state to the off state. Alternatively, if the optical performance monitoring apparatus is externally connected to a control apparatus, the control apparatus may send a switching signal to the switch device, so that the switch device switches from the on state to the off state.

After the switch device switches from the on state to the off state, the control unit or the control apparatus controls the laser to output the third optical signal. Because the third optical signal is used to detect the power of the detected signal, a wavelength of the third optical signal is located within the band of the detected signal.

Step 502: The optical splitter splits the third optical signal into a third light beam and a fourth light beam, and transmits the third light beam to the light-splitting prism in the first direction.

After receiving the third optical signal, the optical splitter splits the third optical signal into two light beams based on the specified split ratio, which are the third light beam and the fourth light beam respectively. The third light beam is output through the third optical port of the optical splitter, transmitted in the first direction, and projected on the first incident surface of the light-splitting prism. The fourth light beam is output to the switch device through the second optical port of the optical splitter. Because the switch device is in the off state in this case, the fourth light beam cannot be further transmitted.

Step 503: The circulator transmits, to the light-splitting prism in the second direction, the detected signal that is transmitted in each channel of the optical fiber and that passes through the detection point, the fiber patch cord, and the pigtail.

On one hand, the optical performance monitoring apparatus transmits the third light beam to the light-splitting prism by performing step 502. On the other hand, the detected signal transmitted in each channel of the optical fiber is transmitted to the pigtail through the detection point and the fiber patch cord, and input to the circulator from the second optical port of the circulator through the pigtail. Conduction is performed from the second optical port of the circulator to the third optical port of the circulator. Therefore, the detected signal is output from the third optical port of the circulator, transmitted in the second direction, and projected on the second incident surface of the light-splitting prism.

Step 504: The light-splitting prism couples the detected signal to the third light beam, and outputs, in the third direction, a fourth optical signal obtained after coupling.

The third light beam transmitted by the optical splitter to the light-splitting prism in the first direction and projected on the first incident surface of the light-splitting prism and the detected signal projected on the second incident surface of the light-splitting prism through the circulator are coupled, and the coupled fourth optical signal is output. The fourth optical signal is transmitted to the power detection unit in the third direction.

Step 505: The power detection unit receives the fourth optical signal, and performs power detection on the fourth optical signal to obtain a second power, where the second power and the insertion loss value of the fiber patch cord between the detection point and the apparatus are used to determine the performance monitoring result of each channel.

After receiving the fourth optical signal, the power detection unit may perform power detection on the fourth optical signal, to obtain the second power. Then, the power detection unit may send the second power to the calculation unit in the optical performance monitoring apparatus or the external calculation apparatus of the optical performance monitoring apparatus, and the calculation unit or the calculation apparatus corrects the second power based on the determined insertion loss value, to obtain a corrected power. Then, the calculation unit or the calculation apparatus may obtain the performance monitoring result of the corresponding channel through calculation based on the corrected power.

This application provides the optical performance monitoring apparatus. The apparatus includes the power detection unit, the light-splitting prism, the laser, the optical splitter, the switch device, and the circulator. The optical port of the laser is connected to the first optical port of the optical splitter, the second optical port of the optical splitter is connected to the first optical port of the switch device, the second optical port of the switch device is connected to the first optical port of the circulator, the second optical port of circulator is connected to the pigtail, and the light-splitting prism is located between the circulator, the optical splitter, and the power detection unit. Through state switching of the switch device in the optical performance monitoring apparatus, the optical performance monitoring apparatus may be configured to detect the insertion loss value between the apparatus and the detection point, and may also be configured to detect the power of the detected signal. In other words, the optical performance monitoring apparatus integrates functions of power detection and insertion loss detection, and therefore are applicable to more application scenarios. In addition, because the apparatus can detect the insertion loss value, after the insertion loss value is detected, the power of the detected signal may be detected, and then the power is corrected by using the detected insertion loss value, to improve accuracy of power detection and improve accuracy of a performance monitoring result of each channel.

All or some of the calculation unit, the control unit, the calculation apparatus, the control apparatus, or the processing apparatus in the foregoing embodiments may be implemented by software, hardware, firmware, or any combination thereof. When software is used to implement the embodiments, the embodiments may be implemented completely or partially in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, microwave, or the like) manner. The computer storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (Digital Versatile Disc, DVD), a semiconductor medium (for example, a solid-state drive (Solid State Disk, SSD)), or the like.

In other words, in the embodiments of this application, a computer-readable storage medium is provided. When the computer-readable storage medium runs on a computer, the computer is enabled to perform the foregoing process of processing the at least two first powers or the at least two second powers sent by the power detection unit.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, an optical disc, or the like.

The foregoing descriptions are merely embodiments of this application, but are not intended to limit this application. Any modification, equivalent replacement, or improvement made without departing from the subject-matter defined by the claims of this application should fall within the protection scope of this application.

## Claims

1. An optical performance monitoring apparatus (300), wherein the apparatus comprises a power detection unit (301), a light-splitting prism (302), a laser (303), an optical splitter (304), a switch device (305), a circulator (306), and a pigtail (307);
an optical port of the laser (303) is connected to a first optical port of the optical splitter (304), a second optical port of the optical splitter (304) is connected to a first optical port of the switch device (305), a second optical port of the switch device (305) is connected to a first optical port of the circulator (306), and the light-splitting prism (302) is located between the circulator (306), the optical splitter (304), and the power detection unit (301);
wherein the laser (303) is configured to output a first optical signal to the optical splitter when the switch device is in an on state;
wherein the optical splitter (304) is configured to split the first optical signal into a first light beam and a second light beam, transmit the first light beam to the light-splitting prism in a first direction, and reversely input, by using the switch device and the circulator, the second light beam to a fiber patch cord connected to the pigtail (307);
wherein the circulator (306) is configured to transmit at least two reflected signals of the second light beam in the fiber patch cord to the light-splitting prism in a second direction;
wherein the light-splitting prism (302) is configured to couple each of the at least two reflected signals to the first light beam, and output, in a third direction, at least two second optical signals obtained after coupling;
wherein the power detection unit (301) is configured to receive the at least two second optical signals, and perform power detection on the at least two second optical signals to obtain at least two first powers, wherein:
either the power detection unit (301) is configured to send the at least two first powers to an external calculation apparatus having a data processing function, via an electrical interface, or
the optical performance monitoring apparatus (300) comprises an integrated calculation unit configured to use the at least two first powers to determine an insertion loss value between a detection point connected to the fiber patch cord and the apparatus;
wherein the laser (303) is further configured to output a third optical signal to the optical splitter when the switch device is in an off state;
wherein the optical splitter (304) is further configured to split the third optical signal into a third light beam and a fourth light beam, and transmit the third light beam to the light-splitting prism in the first direction;
wherein the circulator (306) is further configured to transmit to the light-splitting prism in the second direction, a detected signal that is transmitted in each channel of an optical fiber and that passes through the detection point, the fiber patch cord, and the pigtail;
wherein the light-splitting prism (302) is further configured to couple the detected signal to the third light beam, and output, in the third direction, a fourth optical signal obtained after coupling; and
wherein the power detection unit (301) is further configured to receive the fourth optical signal, and perform power detection on the fourth optical signal to obtain a second power,
wherein:
either the power detection unit (301) is configured to send the second power to an external calculation apparatus having a data processing function, via an electrical interface, or the optical performance monitoring apparatus (300) comprises an integrated calculation unit configured to use the second power and the insertion loss to determine a performance monitoring result of each channel;
wherein a wavelength of the first optical signal is within an extended band different from a band of the detected signal and a wavelength of the third optical signal is within the band of the detected signal.

2. The apparatus according to claim 1, wherein the apparatus further comprises a control unit (309); a first electrical port of the control unit is connected to an electrical port of the laser, and a second electrical port of the control unit is connected to an electrical port of the switch device; and the control unit is configured to control the laser to output an optical signal and control the switch device to switch between the on state and the off state.

3. The apparatus according to claim 1 or 2, wherein the apparatus further comprises a calculation unit (308), and the calculation unit is connected to an electrical port of the power detection unit.

4. The apparatus according to claim 1, wherein the laser is a wavelength-tunable laser, a wavelength range of the optical signal output by the laser comprises a band of the detected signal and the extended band, the detected signal is a signal transmitted in each channel of an optical fiber monitored by the apparatus, and when the switch device is in the on state, a wavelength of the optical signal output by the laser is within the extended band.

5. The apparatus according to any one of claims 1 to 4, wherein the switch device is an optical switch or a variable optical attenuator, VOA.

6. An optical performance monitoring method, wherein the method is applied to the apparatus according to any one of claims 1 to 5, and the method comprises:
outputting, by the laser, a first optical signal to the optical splitter when the switch device is in the on state;
splitting, by the optical splitter, the first optical signal into a first light beam and a second light beam, transmitting the first light beam to the light-splitting prism in a first direction, and reversely inputting, by using the switch device and the circulator, the second light beam to a fiber patch cord connected to the pigtail;
transmitting, by the circulator, at least two reflected signals of the second light beam in the fiber patch cord to the light-splitting prism in a second direction;
coupling, by the light-splitting prism, each of the at least two reflected signals to the first light beam, and outputting, in a third direction, at least two second optical signals obtained after coupling;
receiving, by the power detection unit, the at least two second optical signals, and performing power detection on the at least two second optical signals to obtain at least two first powers, wherein the at least two first powers are used to determine an insertion loss value between a detection point connected to the fiber patch cord and the apparatus;
outputting, by the laser, a third optical signal to the optical splitter when the switch device is in the off state;
splitting, by the optical splitter, the third optical signal into a third light beam and a fourth light beam, and transmitting the third light beam to the light-splitting prism in the first direction;
transmitting, by the circulator to the light-splitting prism in the second direction, a detected signal that is transmitted in each channel of an optical fiber and that passes through the detection point, the fiber patch cord, and the pigtail;
coupling, by the light-splitting prism, the detected signal to the third light beam, and outputting, in the third direction, a fourth optical signal obtained after coupling; and
receiving, by the power detection unit, the fourth optical signal, and performing power detection on the fourth optical signal to obtain a second power, wherein the second power and the insertion loss value between the detection point and the apparatus are used to determine a performance monitoring result of each channel;
wherein a wavelength of the first optical signal is within an extended band different from a band of the detected signal and a wavelength of the third optical signal is within the band of the detected signal.

7. The method according to claim 6, wherein the apparatus further comprises the control unit; and
the outputting, by the laser, a first optical signal to the optical splitter when the switch device is in the on state comprises:
when the switch device is in the on state, controlling, by the control unit, the laser to output a first optical signal whose wavelength is within the extended band to the optical splitter, where the extended band is different from the band of the detected signal.

8. The method according to claim 7, wherein after the performing, by the power detection unit, power detection on the at least two second optical signals, the method further comprises:
controlling, by the control unit, the switch device to switch from the on state to the off state.

9. The method according to any one of claims 6 to 8, wherein the apparatus further comprises the control unit; and
the outputting, by the laser, a third optical signal to the optical splitter when the switch device is in the off state comprises:
when the switch device is in the off state, controlling, by the control unit, the laser to output a third optical signal whose wavelength is within the band of the detected signal to the optical splitter.

10. The method according to claim 6, wherein the apparatus further comprises a calculation unit;
after the performing, by the power detection unit, power detection on the at least two second optical signals to obtain at least two first powers, the method further comprises:
outputting, by the power detection unit, the at least two first powers to the calculation unit; and
calculating, by the calculation unit, the insertion loss value between the detection point and the apparatus based on the at least two first powers; and
after the performing, by the power detection unit, power detection on the fourth optical signal to obtain a second power, the method further comprises:
outputting, by the power detection unit, the second power to the calculation unit; and
calculating, by the calculation unit, the performance monitoring result of each channel based on the second power and the insertion loss value between the detection point and the apparatus.

## Patentansprüche

1. Vorrichtung (300) zur Überwachung der optischen Leistung, wobei die Vorrichtung eine Leistungserkennungseinheit (301), ein Lichtspaltprisma (302), einen Laser (303), einen optischen Splitter (304), eine Schaltvorrichtung (305), einen Zirkulator (306) und eine Anschlussfaser (307) umfasst;
wobei ein optischer Anschluss des Lasers (303) mit einem ersten optischen Anschluss des optischen Splitters (304) verbunden ist, ein zweiter optischer Anschluss des optischen Teilers (304) mit einem ersten optischen Anschluss der Schaltvorrichtung (305) verbunden ist, ein zweiter optischer Anschluss der Schaltvorrichtung (305) mit einem ersten optischen Anschluss des Zirkulators (306) verbunden ist, und das Lichtspaltprisma (302) zwischen dem Zirkulator (306), dem optischen Splitter (304) und der Leistungserkennungseinheit (301) angeordnet ist; wobei der Laser (303) so konfiguriert ist, dass er ein erstes optisches Signal an den optischen Splitter ausgibt, wenn sich die Schaltvorrichtung in einem eingeschalteten Zustand befindet;
wobei der optische Splitter (304) so konfiguriert ist, dass er das erste optische Signal in einen ersten Lichtstrahl und einen zweiten Lichtstrahl aufspaltet, den ersten Lichtstrahl in einer ersten Richtung zu dem Lichtspaltprisma überträgt und den zweiten Lichtstrahl unter Verwendung der Schaltvorrichtung und des Zirkulators in umgekehrter Richtung in ein mit der Anschlussfaser (307) verbundenes LWL-Patchkabel einspeist;
wobei der Zirkulator (306) so konfiguriert ist, dass er mindestens zwei reflektierte Signale des zweiten Lichtstrahls in dem LWL-Patchkabel zu dem Lichtspaltprisma in einer zweiten Richtung überträgt;
wobei das Lichtspaltprisma (302) so konfiguriert ist, dass es jedes der mindestens zwei reflektierten Signale mit dem ersten Lichtstrahl koppelt und in einer dritten Richtung mindestens zwei zweite optische Signale ausgibt, die nach der Kopplung erhalten werden;
wobei die Leistungserkennungseinheit (301) so konfiguriert ist, dass sie die mindestens zwei zweiten optischen Signale empfängt und eine Leistungserkennung an den mindestens zwei zweiten optischen Signalen durchführt, um mindestens zwei erste Leistungen zu erhalten, wobei:
entweder die Leistungserkennungseinheit (301) so konfiguriert ist, dass sie die mindestens zwei ersten Leistungen über eine elektrische Schnittstelle an eine externe Berechnungsvorrichtung mit einer Datenverarbeitungsfunktion sendet,
oder die Vorrichtung (300) zur Überwachung der optischen Leistung eine integrierte Berechnungseinheit umfasst, die so konfiguriert ist, dass sie die mindestens zwei ersten Leistungen verwendet, um einen Einfügungsdämpfungswert zwischen einem mit dem LWL-Patchkabel verbundenen Erkennungspunkt und der Vorrichtung zu bestimmen;
wobei der Laser (303) ferner so konfiguriert ist, dass er ein drittes optisches Signal an den optischen Splitter ausgibt, wenn sich die Schaltvorrichtung in einem ausgeschalteten Zustand befindet;
wobei der optische Splitter (304) ferner so konfiguriert ist, dass er das dritte optische Signal in einen dritten Lichtstrahl und einen vierten Lichtstrahl aufspaltet und den dritten Lichtstrahl in der ersten Richtung an das Lichtspaltprisma überträgt;
wobei der Zirkulator (306) ferner so konfiguriert ist, dass er an das Lichtspaltprisma in der zweiten Richtung ein erfasstes Signal überträgt, das in jedem Kanal einer Lichtleitfaser übertragen wird, und das durch den Erkennungspunkt, das LWL-Patchkabel und die Anschlussfaser läuft;
wobei das Lichtspaltprisma (302) ferner so konfiguriert ist, dass es das erkannte Signal mit dem dritten Lichtstrahl koppelt und in der dritten Richtung ein viertes optisches Signal ausgibt, das nach der Kopplung erhalten wird; und
wobei die Leistungserkennungseinheit (301) ferner so konfiguriert ist, dass sie das vierte optische Signal empfängt und eine Leistungserkennung an dem vierten optischen Signal durchführt, um eine zweite Leistung zu erhalten, wobei:
entweder die Leistungserkennungseinheit (301) so konfiguriert ist, dass sie die zweite Leistung über eine elektrische Schnittstelle an eine externe Berechnungsvorrichtung mit Datenverarbeitungsfunktion sendet,
oder die Vorrichtung (300) zur Überwachung der optischen Leistung eine integrierte Berechnungseinheit umfasst, die so konfiguriert ist, dass sie die zweite Leistung und die Einfügungsdämpfung verwendet, um ein Leistungsüberwachungsergebnis für jeden Kanal zu bestimmen;
wobei eine Wellenlänge des ersten optischen Signals innerhalb eines erweiterten Bandes liegt, das sich von einem Band des erfassten Signals unterscheidet, und eine Wellenlänge des dritten optischen Signals innerhalb des Bandes des erkannten Signals liegt.

2. Vorrichtung nach Anspruch 1, wobei die Vorrichtung ferner eine Steuereinheit (309) umfasst;
wobei ein erster elektrischer Anschluss der Steuereinheit mit einem elektrischen Anschluss des Lasers verbunden ist, und ein zweiter elektrischer Anschluss der Steuereinheit mit einem elektrischen Anschluss der Schaltvorrichtung verbunden ist; und
die Steuereinheit so konfiguriert ist, dass sie den Laser so steuert, dass er ein optisches Signal ausgibt, und die Schaltvorrichtung so steuert, dass sie zwischen dem eingeschalteten Zustand und dem ausgeschalteten Zustand wechselt.

3. Vorrichtung nach Anspruch 1 oder 2, wobei die Vorrichtung ferner eine Berechnungseinheit (308) umfasst, und die Berechnungseinheit mit einem elektrischen Anschluss der Leistungserkennungseinheit verbunden ist.

4. Vorrichtung nach Anspruch 1, wobei der Laser ein wellenlängenabstimmbarer Laser ist, ein Wellenlängenbereich des von dem Laser ausgegebenen optischen Signals ein Band des erkannten Signals und das erweiterte Band umfasst, das erkannte Signal ein Signal ist, das in jedem Kanal einer von der Vorrichtung überwachten Lichtleitfaser übertragen wird, und wenn sich die Schaltvorrichtung im eingeschalteten Zustand befindet, eine Wellenlänge des von dem Laser ausgegebenen optischen Signals innerhalb des erweiterten Bands liegt.

5. Vorrichtung nach einem der Ansprüche 1 bis 4, wobei die Schaltvorrichtung ein optischer Schalter oder ein variabler optischer Abschwächer (VOA) ist.

6. Verfahren zur Überwachung der optischen Leistung, wobei das Verfahren auf die Vorrichtung nach einem der Ansprüche 1 bis 5 angewandt wird, und das Verfahren Folgendes umfasst:
Ausgeben, durch den Laser, eines ersten optischen Signals an den optischen Splitter, wenn sich die Schaltvorrichtung im eingeschalteten Zustand befindet;
Aufspalten, durch den optischen Splitter, des ersten optischen Signals in einen ersten Lichtstrahl und einen zweiten Lichtstrahl, Übertragen des ersten Lichtstrahls an das Lichtspaltprisma in einer ersten Richtung, und
umgekehrtes Einspeisen, mit Hilfe der Schaltvorrichtung und des Zirkulators, des zweiten Lichtstrahls in ein mit der Anschlussfaser verbundenes LWL-Patchkabel;
Übertragen, durch den Zirkulator, von mindestens zwei reflektierten Signalen des zweiten Lichtstrahls im LWL-Patchkabel an das Lichtspaltprisma in einer zweiten Richtung;
Koppeln, durch das Lichtspaltprisma, jedes der mindestens zwei reflektierten Signale mit dem ersten Lichtstrahl, und Ausgeben, in einer dritten Richtung, von mindestens zwei zweiten optischen Signalen, die nach der Kopplung erhalten werden;
Empfangen, durch die Leistungserkennungseinheit, der mindestens zwei zweiten optischen Signale, und Durchführen einer Leistungserkennung an den mindestens zwei zweiten optischen Signalen, um mindestens zwei erste Leistungen zu erhalten,
wobei die mindestens zwei ersten Leistungen verwendet werden, um einen Einfügungsdämpfungswert zwischen einem mit dem LWL-Patchkabel verbundenen Erkennungspunkt und der Vorrichtung zu bestimmen;
Ausgeben, durch den Laser, eines dritten optischen Signals an den optischen Splitter, wenn sich die Schaltvorrichtung im ausgeschalteten Zustand befindet;
Aufspalten, durch den optischen Splitter, des dritten optischen Signals in einen dritten Lichtstrahl und einen vierten Lichtstrahl, und Übertragen des dritten Lichtstrahls an das Lichtspaltprisma in der ersten Richtung;
Übertragen, durch den Zirkulator an das Lichtspaltprisma in der zweiten Richtung, eines erkannten Signals, das in jedem Kanal einer Lichtleitfaser übertragen wird und den Erkennungspunkt, das LWL-Patchkabel und die Anschlussfaser durchläuft;
Koppeln, durch das Lichtspaltprisma, des erkannten Signals mit dem dritten Lichtstrahl, und Ausgeben, in der dritten Richtung, eines vierten optischen Signals, das nach der Kopplung erhalten wird; und
Empfangen, durch die Leistungserkennungseinheit, des vierten optischen Signals, und Durchführen einer Leistungserkennung an dem vierten optischen Signal, um eine zweite Leistung zu erhalten,
wobei die zweite Leistung und der Einfügungsdämpfungswert zwischen dem Erfassungspunkt und der Vorrichtung verwendet werden, um ein Leistungsüberwachungsergebnis für jeden Kanal zu bestimmen;
wobei eine Wellenlänge des ersten optischen Signals innerhalb eines erweiterten Bandes liegt, das sich von einem Band des erfassten Signals unterscheidet, und eine Wellenlänge des dritten optischen Signals innerhalb des Bandes des erkannten Signals liegt.

7. Verfahren nach Anspruch 6, wobei die Vorrichtung ferner die Steuereinheit umfasst; und
das Ausgeben, durch den Laser, eines ersten optischen Signals an den optischen Splitter, wenn sich die Schaltvorrichtung im eingeschalteten Zustand befindet, Folgendes umfasst:
wenn sich die Schaltvorrichtung im eingeschalteten Zustand befindet, Steuern des Lasers durch die Steuereinheit, um ein erstes optisches Signal, dessen Wellenlänge innerhalb des erweiterten Bandes liegt, an den optischen Splitter auszugeben, wobei sich das erweiterte Band von dem Band des erkannten Signals unterscheidet.

8. Verfahren nach Anspruch 7, wobei nach dem Durchführen der Leistungserkennung an den mindestens zwei zweiten optischen Signalen durch die Leistungserkennungseinheit das Verfahren ferner Folgendes umfasst:
Steuern, durch die Steuereinheit, der Schaltvorrichtung, um vom eingeschalteten Zustand in den ausgeschalteten Zustand zu wechseln.

9. Verfahren nach einem der Ansprüche 6 bis 8, wobei die Vorrichtung ferner die Steuereinheit umfasst; und
das Ausgeben, durch den Laser, eines dritten optischen Signals an den optischen Splitter, wenn sich die Schaltvorrichtung im ausgeschalteten Zustand befindet, Folgendes umfasst:
wenn sich die Schaltvorrichtung im ausgeschalteten Zustand befindet, Steuern, durch die Steuereinheit, des Lasers, um ein drittes optisches Signal, dessen Wellenlänge innerhalb des Bandes des erfassten Signals liegt, an den optischen Splitter auszugeben.

10. Verfahren nach Anspruch 6, wobei die Vorrichtung ferner eine Berechnungseinheit umfasst;
wobei das Verfahren nach der Durchführung, durch die Leistungserkennungseinheit, der Leistungserkennung an den mindestens zwei zweiten optischen Signalen, um mindestens zwei erste Leistungen zu erhalten, ferner Folgendes umfasst:
Ausgeben, durch die Leistungserkennungseinheit, der mindestens zwei ersten Leistungen an die Berechnungseinheit; und
Berechnen, durch die Berechnungseinheit, des Einfügungsdämpfungswertes zwischen dem Erkennungspunkt und der Vorrichtung auf der Grundlage der mindestens zwei ersten Leistungen; und
wobei das Verfahren nach der Durchführung, durch die Leistungserkennungseinheit, der Leistungserkennung des vierten optischen Signals, um eine zweite Leistung zu erhalten, ferner Folgendes umfasst:
Ausgeben, durch die Leistungserkennungseinheit, der zweiten Leistung an die Berechnungseinheit; und
Berechnen, durch die Berechnungseinheit, des Leistungsüberwachungsergebnisses jedes Kanals auf der Grundlage der zweiten Leistung und des Einfügungsdämpfungswertes zwischen dem Erkennungspunkt und der Vorrichtung.

## Revendications

1. Appareil (300) de surveillance de la performance optique, l'appareil comprenant une unité de détection de puissance (301), un prisme séparateur de lumière (302), un laser (303), un séparateur optique (304), un dispositif commutateur (305), un circulateur (306) et une queue de cochon (307) ;
un port optique du laser (303) étant connecté à un premier port optique du séparateur optique (304), un deuxième port optique du séparateur optique (304) étant connecté à un premier port optique du dispositif commutateur (305), un deuxième port optique du dispositif commutateur (305) étant connecté à un premier port optique du circulateur (306), et le prisme séparateur de lumière (302) se situant entre le circulateur (306), le séparateur optique (304) et l'unité de détection de puissance (301) ;
le laser (303) étant configuré pour délivrer un premier signal optique au séparateur optique lorsque le dispositif commutateur est dans un état commutant ;
le séparateur optique (304) étant configuré pour séparer le premier signal optique en un premier faisceau lumineux et un deuxième faisceau lumineux, transmettre le premier faisceau lumineux au prisme séparateur de lumière dans une première direction, et introduire en sens inverse, au moyen du dispositif commutateur et du circulateur, le deuxième faisceau lumineux dans une jarretière optique connectée à la queue de cochon (307) ;
le circulateur (306) étant configuré pour transmettre au moins deux signaux réfléchis du deuxième faisceau lumineux dans la jarretière optique au prisme séparateur de lumière dans une deuxième direction ;
le prisme séparateur de lumière (302) étant configuré pour coupler chacun des au moins deux signaux réfléchis au premier faisceau lumineux, et délivrer, dans une troisième direction, au moins deux deuxièmes signaux optiques obtenus suite au couplage ; l'unité de détection de puissance (301) étant configurée pour recevoir les au moins deux deuxièmes signaux optiques, et réaliser une détection de puissance sur les au moins deux deuxièmes signaux optiques afin d'obtenir au moins deux premières puissances,
soit l'unité de détection de puissance (301) étant configurée pour envoyer les au moins deux premières puissances à un appareil de calcul externe doté d'une fonction de traitement de données, via une interface électrique, soit
l'appareil (300) de surveillance de la performance optique comprenant une unité de calcul intégrée configurée pour utiliser les au moins deux premières puissances afin de déterminer une valeur de perte d'insertion entre un point de détection connecté à la jarretière optique et l'appareil ;
le laser (303) étant configuré en outre pour délivrer un troisième signal optique au séparateur optique lorsque le dispositif commutateur est dans un état passant ;
le séparateur optique (304) étant configuré en outre pour séparer le troisième signal optique en un troisième faisceau lumineux et un quatrième faisceau lumineux, et transmettre le troisième faisceau lumineux au prisme séparateur de lumière dans la première direction ;
le circulateur (306) étant configuré en outre pour transmettre au prisme séparateur de lumière, dans la deuxième direction, un signal détecté qui est transmis dans chaque canal d'une fibre optique et qui passe par le point de détection, la jarretière optique et la queue de cochon ;
le prisme séparateur de lumière (302) étant configuré en outre pour coupler le signal détecté au troisième faisceau lumineux, et délivrer, dans la troisième direction, un quatrième signal optique obtenu suite au couplage ; et
l'unité de détection de puissance (301) étant configurée en outre pour recevoir le quatrième signal optique, et réaliser une détection de puissance sur le quatrième signal optique afin d'obtenir une deuxième puissance,
soit l'unité de détection de puissance (301) étant configurée pour envoyer la deuxième puissance à un appareil de calcul externe doté d'une fonction de traitement de données, via une interface électrique, soit l'appareil (300) de surveillance de la performance optique comprenant une unité de calcul intégrée configurée pour utiliser la deuxième puissance et la perte d'insertion afin de déterminer un résultat de surveillance de la performance de chaque canal ;
une longueur d'onde du premier signal optique étant comprise dans une bande étendue différente d'une bande du signal détecté et une longueur d'onde du troisième signal optique étant comprise dans la bande du signal détecté.

2. Appareil selon la revendication 1, l'appareil comprenant en outre une unité de commande (309) ; un premier port électrique de l'unité de commande étant connecté à un port électrique du laser, et un deuxième port électrique de l'unité de commande étant connecté à un port électrique du dispositif commutateur ; et l'unité de commande étant configurée pour commander au laser de délivrer un signal optique et commander au dispositif commutateur de commuter entre l'état commutant et l'état passant.

3. Appareil selon la revendication 1 ou 2, l'appareil comprenant en outre une unité de calcul (308), et l'unité de calcul étant connectée à un port électrique de l'unité de détection de puissance.

4. Appareil selon la revendication 1, dans lequel le laser est un laser accordable en longueur d'onde, une plage de longueurs d'onde du signal optique délivré par le laser comprend une bande du signal détecté et la bande étendue, le signal détecté est un signal transmis dans chaque canal d'une fibre optique surveillée par l'appareil et, lorsque le dispositif commutateur est dans l'état commutant, une longueur d'onde du signal optique délivré par le laser est comprise dans la bande étendue.

5. Appareil selon l'une quelconque des revendications 1 à 4, dans lequel le dispositif commutateur est un commutateur optique ou un atténuateur optique variable, noté VOA.

6. Procédé de surveillance de la performance optique, le procédé étant appliqué à l'appareil selon l'une quelconque des revendications 1 à 5, et le procédé comprenant :
la délivrance, par le laser, d'un premier signal optique au séparateur optique lorsque le dispositif commutateur est dans l'état commutant ;
la séparation, par le séparateur optique, du premier signal optique en un premier faisceau lumineux et un deuxième faisceau lumineux, la transmission du premier faisceau lumineux au prisme séparateur de lumière dans une première direction, et l'introduction en sens inverse, au moyen du dispositif commutateur et du circulateur, du deuxième faisceau lumineux dans une jarretière optique connectée à la queue de cochon ;
la transmission, par le circulateur, d'au moins deux signaux réfléchis du deuxième faisceau lumineux dans la jarretière optique au prisme séparateur de lumière dans une deuxième direction ;
le couplage, par le prisme séparateur de lumière, de chacun des au moins deux signaux réfléchis au premier faisceau lumineux, et la délivrance, dans une troisième direction, d'au moins deux deuxièmes signaux optiques obtenus suite au couplage ;
la réception, par l'unité de détection de puissance, des au moins deux deuxièmes signaux optiques, et la réalisation d'une détection de puissance sur les au moins deux deuxièmes signaux optiques afin d'obtenir au moins deux premières puissances, les au moins deux premières puissances étant utilisées pour déterminer une valeur de perte d'insertion entre un point de détection connecté à la jarretière optique et l'appareil ;
la délivrance, par le laser, d'un troisième signal optique au séparateur optique lorsque le dispositif commutateur est dans l'état passant ;
la séparation, par le séparateur optique, du troisième signal optique en un troisième faisceau lumineux et un quatrième faisceau lumineux, et la transmission du troisième faisceau lumineux au prisme séparateur de lumière dans la première direction ;
la transmission, par le circulateur au prisme séparateur de lumière, dans la deuxième direction, d'un signal détecté qui est transmis dans chaque canal d'une fibre optique et qui passe par le point de détection, la jarretière optique et la queue de cochon ;
le couplage, par l'unité de détection de puissance, du signal détecté au troisième faisceau lumineux, et la délivrance, dans la troisième direction, d'un quatrième signal optique obtenu suite au couplage ; et
la réception, par l'unité de détection de puissance, du quatrième signal optique, et la réalisation d'une détection de puissance sur le quatrième signal optique afin d'obtenir une deuxième puissance, la deuxième puissance et la valeur de perte d'insertion entre le point de détection et l'appareil étant utilisées pour déterminer un résultat de surveillance de la performance de chaque canal ;
une longueur d'onde du premier signal optique étant comprise dans une bande étendue différente d'une bande du signal détecté et une longueur d'onde du troisième signal optique étant comprise dans la bande du signal détecté.

7. Procédé selon la revendication 6, dans lequel l'appareil comprend en outre l'unité de commande ; et
la délivrance, par le laser, d'un premier signal optique au séparateur optique lorsque le dispositif commutateur est dans l'état commutant comprend :
lorsque le dispositif commutateur est dans l'état commutant, la commande, par l'unité de commande, au laser de délivrer au séparateur optique un premier signal optique dont la longueur d'onde est comprise dans la bande étendue, la bande étendue étant différente de la bande du signal détecté.

8. Procédé selon la revendication 7, le procédé comprenant en outre, après la réalisation, par l'unité de détection de puissance, d'une détection de puissance sur les au moins deux deuxièmes signaux optiques :
la commande, par l'unité de commande, au dispositif commutateur de commuter de l'état commutant sur l'état passant.

9. Procédé selon l'une quelconque des revendications 6 à 8, dans lequel l'appareil comprend en outre l'unité de commande ; et
la délivrance, par le laser, d'un troisième signal optique au séparateur optique lorsque le dispositif commutateur est dans l'état passant comprend :
lorsque le dispositif commutateur est dans l'état passant, la commande, par l'unité de commande, au laser de délivrer au séparateur optique un troisième signal optique dont la longueur d'onde est comprise dans la bande du signal détecté.

10. Procédé selon la revendication 6, dans lequel l'appareil comprend en outre une unité de calcul ;
le procédé comprenant en outre, après la réalisation, par l'unité de détection de puissance, d'une détection de puissance sur les au moins deux deuxièmes signaux optiques afin d'obtenir au moins deux premières puissances :
la délivrance, par l'unité de détection de puissance, des au moins deux premières puissances à l'unité de calcul ; et
le calcul, par l'unité de calcul, de la valeur de perte d'insertion entre le point de détection et l'appareil sur la base des au moins deux premières puissances ; et
le procédé comprenant en outre, après la réalisation, par l'unité de détection de puissance, d'une détection de puissance sur le quatrième signal optique afin d'obtenir une deuxième puissance :
la délivrance, par l'unité de détection de puissance, de la deuxième puissance à l'unité de calcul ; et
le calcul, par l'unité de calcul, du résultat de surveillance de la performance de chaque canal sur la base de la deuxième puissance et de la valeur de perte d'insertion entre le point de détection et l'appareil.
